# EUROPEAN PATENT APPLICATION

(11) **EP 4 052 621 A1**
(43) Date of publication of application: **07.09.2022**
(21) Application number: 20811126.0
(22) Date of filing: 28.10.2020
(51) Int. Cl.: A47J 31/52

(54) **SYSTEMS AND PROCESSES FOR PREPARING BEVERAGES WITH ENHANCED DETECTION OF ACTUATION STATES**

(30) Priority: 31.10.2019 PT 2019115873
(71) Applicant: Novadelta-Comércio e Industria de Cafés, Lda., 1950-041 Lisboa (PT)
(72) Inventor: NABEIRO, Rui Miguel, 7370-112 CAMPO MAIOR (PT); MEDINA MUNDT, Jesús, 1800-098 LISBOA (PT); DE BRITO LEÃO, João André, 4400-508 VILA NOVA DE GAIA (PT); GONÇALVES MARTINS, Marco Filipe, 2480-093 PEDREIRAS (PT); DE FIGUEIREDO BRANCO, João André, 1885-091 MOSCAVIDE (PT); DA SILVA FERROLHO MENDES, Tiago Rafael, 1300-001 LISBOA (PT); ALEXANDRE CORREIA, Filipe, 2640-813 MAFRA (PT)
(74) Representative: Ferreira Pinto, Francisca
(86) International application number: PCT/PT2020/050037
(87) International publication number: WO 2021/086215

(57) **Abstract**

The present invention discloses systems and processes for preparing beverages, in particular espresso coffee and similar aromatic beverages, comprising at least one type of drinking recipient (1), for example of glass type, cup or similar, and an apparatus (10) comprising a beverage discharge disposition (2) operatively associated with a beverage preparation device (3) adapted so that can be driven by a motorized actuation device (4) and collect an individual portion (7) of beverage ingredients, whereby said apparatus (10) comprises control means (9) configured so that can process data of several operative parameters of said apparatus (10), including data relating to the entry of the individual (7) portion in said beverage preparation device (3) and data relating to the position of said actuation device (4), and being further configured so that can determine actuations of said actuation device (4) and display of progress indications and of operation errors based upon said data of operative parameters.

## Description

### Field of the invention

The present invention refers to the field of the systems and processes for preparing beverage based upon an individual portion of beverage ingredients, an in particular whereby the beverage discharge unfolds along a direction contrary to the direction of the gravity force.

### Background of the invention

The prior art presents several solutions of apparatus with beverage discharge along a direction contrary to the direction of the gravity force. In particular, in the case of beverage preparation systems based upon an individual portion of precursor substance, such as for example a capsule or pod containing roast and ground coffee beans, or other edible substance, in each operation cycle there is to be an introduction of said individual portion into a beverage preparation device and posterior ejection of said individual portion out of this device after beverage preparation and discharge. Said beverage preparation device can be actuated automatically, for example by means of an electric motor, between open and closed positions, and thereby collect and eject said individual portion.

The document WO 2017/200409 A1 filed by the author of the present invention, is relative to a beverage preparation system of the type of the present invention, comprising drinking recipients adapted so that can be operatively retained on the discharge disposition of beverage preparation apparatus. In particular, this document discloses more ergonomic solutions of general configuration of the apparatus and communication interfaces thereof. Moreover, the document further discloses a beverage preparation process that includes the detection of the operational state of the flow pressurization device, as well as the placement and correct placement of the drinking recipient on the beverage discharge disposition, whereby said flow pressurization device is prevented from operating as long as there is detected the non-placement or the incorrect placement of said drinking recipient on the beverage discharge. This measure of control of operation advantageously provides more reliability and safety use of a system of this type. Said process further includes the display of information of operative state relating to a correct placement of the drinking recipient.

The document WO 2018/194475 A1 filed by the author of the present invention, is also related to a beverage preparation system of the type of the present invention. In particular, this document discloses solutions for optimizing the beverage flow passage through a portion of the base region of said drinking recipient, into the interior of the collection space thereof. None of the documents in the prior art discloses a solution providing a system with beverage discharge along a direction opposite the direction of gravity force, and that provides means and modes of a more reliable and ergonomic control, in particular associated with different types of situations that can occur with the use of the system, besides of the correct placement of the drinking recipient.

### General description of the invention

The objective of the present invention is to provide a system for preparing beverages including an individual portion, a drinking recipient and a beverage preparation apparatus with more ergonomic operation, said apparatus comprising at least one beverage preparation device, in particular for extraction of aromatic beverages such as for example espresso type coffee, adapted so that can be moved by an actuation device, such as for example an electric motor, and can collect a portion of edible substance, optionally provided inside of a gas tight envelope, such as for example a capsule, pod, or similar, adapted so that can be moved by an actuation device, such as for example an electric motor, and that can collect a portion of edible substance, optionally provided inside of a gas tight envelope, such as for example a capsule, pod, or similar, and a beverage discharge disposition along a direction opposite to the gravity force, said apparatus further presenting control means adapted so as to provide a simpler and more ergonomic operation of the apparatus in general, and of each beverage preparation cycle in particular.

In particular, the objective of the present invention is to provide more efficient and ergonomic means of regulation of each operation cycle in apparatus with this type of relative discharge and drinking recipient, and of detection and correction of eventual operation errors, such as for example jamming of the individual portion at the entry or exit of the beverage preparation device.

This objective is attained according to the present invention by means of a system for preparing beverages according to claim 1.

In particular, aforementioned objective is solved according to the present invention by means of a system whereby the beverage preparation apparatus presents control means adapted so that, for each operation cycle, can determine: readiness for starting the operation cycle, operation errors, such as for example jamming of the individual portion, and corrective measures thereof, and that can regulate at least one of: commanding the flow pressurization device and commanding the actuation device, as well as display to the user of progress indications and operation errors based upon operative parameter data, in particular based upon the assessment of at least two, preferentially at least three, parameters relating to the retention of the drinking recipient in the beverage discharge disposition, to the position of the individual portion relative to the beverage preparation device, and to the relative position of the actuation device corresponding to total opening and total closure of the beverage preparation device.

A related objective is that of, considering the relative disposition of beverage discharge and drinking recipient, providing simpler and more ergonomic means of apprehension and confirmation of the operative placement of the drinking recipient, and of the entry and exit region of the individual portion from the beverage preparation device, as well as simpler and more ergonomic information display means relating to the operating readiness state of said system, so that the user can do it in safe conditions.

In this sense, the beverage preparation apparatus includes control means adapted so that can regulate each cycle based upon the assessment of conditional relations associated with the following control events: the relative position of the drinking recipient on said beverage discharge disposition, preferentially further along a handling alignment associated with said beverage discharge disposition; the relative position of the individual portion relative to the beverage preparation device; the relative position of the beverage preparation device relative to respective totally open and closed positions.

A related objective is to provide simpler and more ergonomic means of interaction of a user with a system of the type of the present invention, including minimizing the number of interactions and displaying related information.

This objective is solved according to the present invention by means of a system whereby the beverage preparation apparatus comprises control means adapted so that, in each beverage preparation cycle, can automatically command: the fluid injection and the opening and closing of said beverage preparation device, as a function of the detection of respective control events, preferentially by means of a plurality of detection sensor, and without requiring a specific actuation by the user, whereby at least one of said control events is preferentially associated with the manipulation of the drinking recipient on said beverage discharge disposition.

It is herewith advantageously provided that the beverage preparation apparatus can be devoid of user interfaces specific for commanding the start and end of operation cycles, and for opening and closing of the beverage preparation device.

Another objective of the present invention is to provide a process for preparing beverages that provides improved reliability and safety conditions in each beverage preparation cycle in an apparatus with beverage discharge in a direction opposite to the direction of the gravity force.

This objective is solved according to claim 11, whereby referred embodiments are presented in the depending claims.

In particular, the process according to the invention can include providing a beverage preparation system according to any one of claims 1 to 10.

### Description of the Figures

The invention shall be hereinafter explained in greater detail based upon preferred embodiments and the attached Figures.

The Figures show different aspects and components in a system according to the present invention, in simplified schematic representations:
- Figure 1:: side and top view of a first embodiment of a drinking recipient (1) and apparatus (10) for preparing beverages;
- Figure 2:: side and top view of a drinking recipient (1) placed on a beverage discharge disposition (2) of apparatus (10);
- Figure 3:: side views of the beverage preparation device (3) completely open (top) and closed (bottom);
- Figure 4:: frontal view of beverage preparation device (3) and portion sensors (31, 32) of an apparatus (10);
- Figure 5:: flow diagram of main operation stages in a process according to the invention;
- Figure 6:: flow diagram of main operation stages in a process according to the invention;
- Figure 7:: flow diagram of several interactions and control events before beginning the fluid injection in a process according to the invention;
- Figure 8:: flow diagram associated with a first error occurrence and first correction thereof;
- Figure 9:: flow diagram associated with a first error occurrence and non-correction thereof;
- Figure 10:: flow diagram associated with a first error occurrence and second correction thereof;
- Figure 11:: flow diagram associated with the verification of control events until the beginning of the beverage discharge in a preferred embodiment of the process according to the invention;
- Figure 12:: flow diagram associated with the verification of control events until the beginning of the beverage discharge in a preferred embodiment of the process according to the invention;
- Figure 13:: flow diagram associated with steps after conclusion of the fluid injection in a process according to the invention;
- Figure 14:: flow diagram associated with a second error occurrence and correction thereof.

### Detailed description of preferred embodiments of the invention

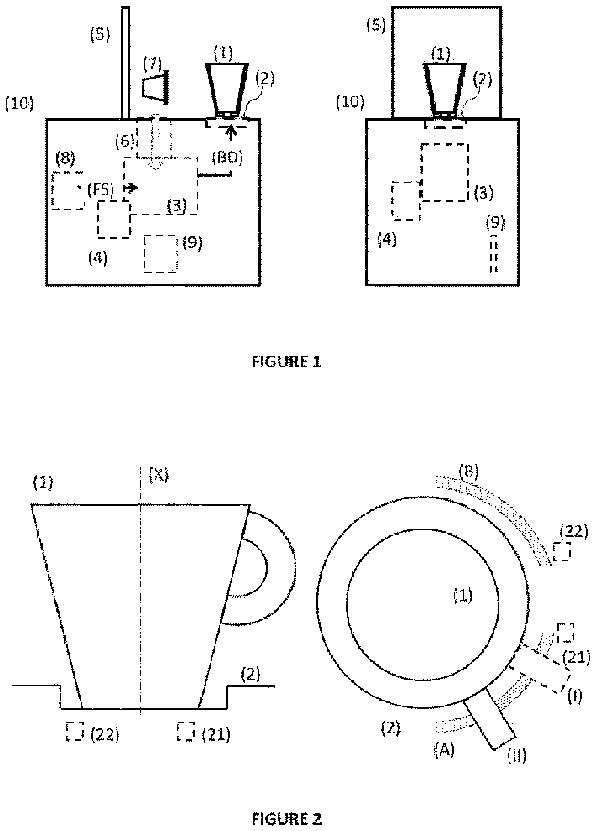

**Figure 1** represents side (on the left-hand side of the drawing) and frontal views of a system for preparing beverages according to the present invention that includes a drinking recipient (1), an individual portion (7) of a beverage precursor edible substance, for example in the form of a capsule such as referred in the drawings, or similar, and an apparatus (10) for preparing beverages based thereupon.

Said apparatus (10) can include a fluid reservoir (not represented), as well as fluid heating means, for example a thermoblock (not represented), and a flow pressurization device (8), for example a hydraulic pump, so that can provide a flow supply (FS) at a temperature comprised between 60 and 100 °C and under a pressure comprised between 1 and 20 bar, preferentially between 8 and 16 bar, so as to interact with said edible substance. The expert in the field knows these means such that one herewith abdicates from a more detailed representation or description thereof.

Moreover, the apparatus (10) presents a beverage preparation device (3) provided so that can collect said individual portion (7) and impinge the latter with said pressurized flow (FS) so that mixes with the edible substance and a beverage results therefrom. Said beverage preparation device (3) can be actuated between open and closed positions, and vice-versa, by means of an actuation device (4), referred to as motor in the drawings. The individual portion (7) can be supplied to the beverage preparation device (3) by insertion thereof into a respective portion inlet (6). An access disposition (5) configured as actionable lid-like element, can enable access to the portion inlet (6). Other possibilities of supplying individual portions (7) are not excluded from the scope of the present invention.

After preparing the beverage, the flow of beverage discharge (BD) is conducted from an exit of said beverage preparation device (3) to a beverage discharge disposition (2) arranged downstream thereof, and presenting injection means (23) so that the beverage discharge to the interior of said drinking recipient (1) unfolds through a base zone thereof.

In the case of this embodiment, the apparatus (10) further presents an access disposition (5) adapted so that can be moved between a first and second position where provides access to the beverage discharge disposition (2) for placing the drinking recipient (1), and vice-versa.

The apparatus (10) further comprises control means (9) adapted so that can control the operation of the flow pressurization (8) and beverage preparation device (3), as well of several other components of the apparatus (10), including of said actuation device (4) and access disposition (5), and the display of information to the user.

In particular, said control means (9) (also referred to in the drawings as control device), are adapted so that can apprehend data from of a plurality of operating parameters, including: data relating to the position of the access disposition (5), to the correct placement of drinking recipient (1) on said beverage discharge disposition (2), to the presence of individual portion (7) on said apparatus (10), as well as to the position of said actuation device (4), in particular on the edges of the displacement path, thereby inferring the corresponding position of the beverage preparation device (3), in particular completely closed and open.

In particular, according to an aspect of the present invention, in view of the regulation of correct handling of the drinking recipient (1) and individual portion (7) in each cycle, the control means (9) operate based upon the assessment of conditional relations associated with:
- the relative position of drinking recipient (1) on the beverage discharge disposition (2), preferentially further along a handling alignment (A) associated with the beverage discharge disposition (2),
- the relative position of the individual portion (7) relative to the beverage preparation device (3),
- the relative position of the beverage preparation device (3) relative to respective totally open and closed positions.

The apparatus (10) can herewith detect eventual handling mistakes, trigger corrective measures thereof, and display respective information to a user.

It is preferred when the actuation device is a DC electric motor.

In particular, according to another aspect of the present invention, said control means (9) are adapted so that, in each operation cycle, can automatically command: the fluid injection by said flow pressurization device (8), and the opening and closing of said beverage preparation device (3), as a function of the detection of respective control events, preferentially by means of detection sensors (21, 22; 31, 32; 41, 42), and without requiring a specific intervention, interaction or actuation by the user, whereby at least one of said control events is preferentially associated with the manipulation of the drinking recipient (1) on said beverage discharge disposition (2). It is herewith advantageously provided that said apparatus (10) can be devoid of user interfaces specific for actuation of beginning and end of operation cycle, and for opening and closing of said beverage preparation device (3).

**Figure 2** diagrammatically represents the placement of the drinking recipient (1) on a beverage discharge disposition (2). In particular, said drinking recipient (1) can be placed by the user in a first retention position, associated with at least one previously defined handling alignment (A, B), where it remains retained in an operative position, and is afterwards manipulated by the user along said handling alignment (A, B), thereby actuating at least one recipient sensor (21, 22).

It is preferred when said handling alignment (A) extends around the drinking recipient (1), in particular so that said first recipient sensor (21) can be actuated by means of rotation of the drinking recipient (1) around a vertical axis (X) thereof, between a first (I) and a second position (II), thereby apprehending the respective relative displacement.

It is preferred when a first recipient sensor (21) is associated with an initial retention position of the drinking recipient (1) on the beverage discharge disposition (2). In a preferred embodiment, said first recipient sensor (21) is adapted so that can apprehend said initial retention position of the recipient, and associated with a first direction of the handling alignment (A) so that can further apprehend a relative dimension of displacement of the drinking recipient (1) there along, whereby said relative dimension of displacement can be associated by said control means (9) to a corresponding quantity of beverage to be discharged in each cycle.

The beverage discharge disposition (2) can present a second handling alignment (B), for example associated with a different type of beverage discharge, or to a second type of beverage, such as for example tea. In this case there can be further provided a second recipient sensor (22) associated with said second handling alignment (B).

Said beverage preparation apparatus (10) can further comprise sensors (41, 42) of beginning and end of the displacement path of the actuation device (4), whereby both said sensors of beginning and end of displacement path are preferentially of switch type actuated by mechanical contact, adapted so that can be actuated by contact, in particular by the mobile part of the actuation device (4), and so that respective actuation data are communicated to said control means (9).

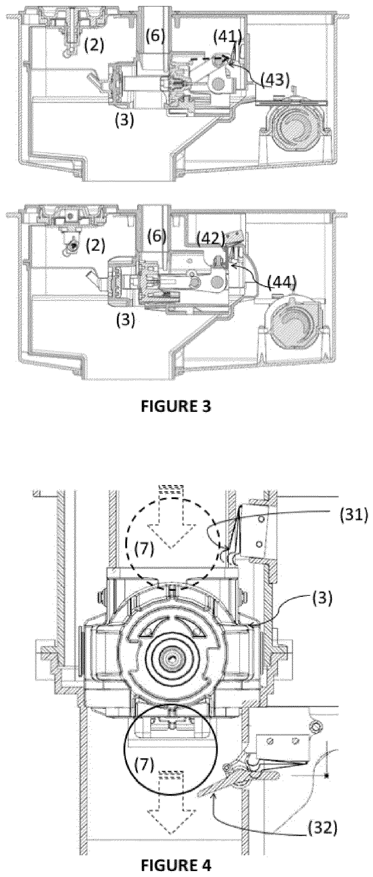

As represented in **Figure 3****,** the apparatus (10) can comprise first (41) and second (42) actuation sensors associated with the edges of the actuation path of the actuation device (4), so that they are actuated while the latter is at one of said edges.

In particular, when at an open position (top drawing), a first part associated with said actuation device (4), preferentially an actuation part (43) of the beverage preparation device (3), actuates a first actuation sensor (41), whereas at a closed position (bottom drawing), another actuation part associated with the movement generated by the actuation device (4), preferentially an actuation extension (44), actuates a second actuation sensor (42) provided in the proximity but in different actuation orientation from said first actuation sensor (41) .

Said beverage preparation apparatus (10) can further comprise portion detection means (31, 32) adapted so that can be actuated by said individual portion (7) in at least one of: inside of said beverage preparation device (3), upstream (A) and downstream (B) of said beverage preparation device (3).

As represented in **Figure 4****,** said apparatus (10) can comprise first (31) and second (32) portion sensors, arranged respectively upstream and downstream of said beverage preparation device (3), whereby both said portion sensors (31, 32) are preferentially of the switch type actuated by mechanical contact, adapted so that can be actuated by contact, in particular by the passage of the individual portion (7), and so that respective actuation data are communicated to said control means (9).

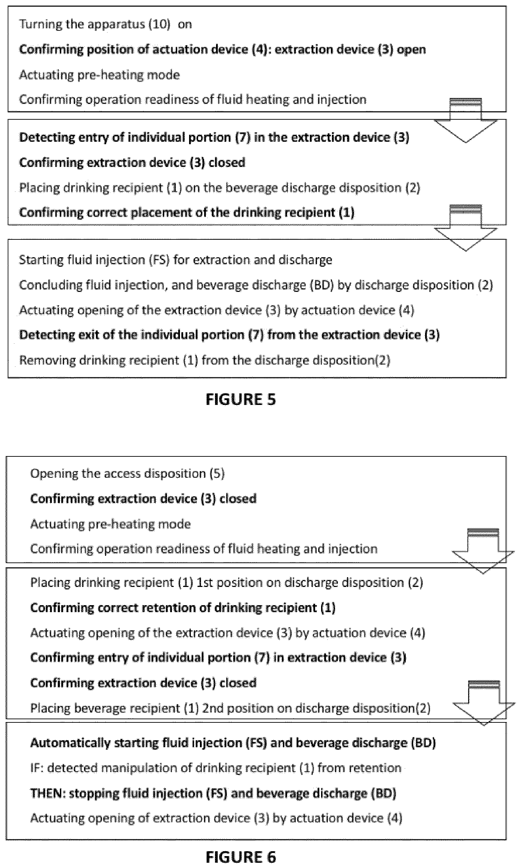

**Figure 5** represents the main phases of a first embodiment of a process of operation according to the present invention.

As known in general in this type of systems, after turning the apparatus (10) on there is a first phase for providing operation conditions, including readiness of the heating temperature, after which each operation cycle basically includes the introduction of individual portion (7) in the beverage preparation device (3), the placement of the drinking recipient (1) in position of collecting the beverage, the start of the fluid injection, and the end of the beverage discharge, with ejection of the individual portion (7) and removal of the drinking recipient (1).

In a first phase, the apparatus (10) is turned on, after which there is an automatic confirmation of the position of the actuation device (4) corresponding to an open beverage preparation device (3), and the actuation of the heating means is initiated so as to reach an operating temperature. At the end of this phase the apparatus (10) can display information of operational readiness to the user.

In a second phase, the individual portion (7) is supplied to the beverage preparation device (3) and the drinking recipient (1) is placed on the beverage discharge disposition (2), whereby the sequence of these steps can be random.

In the case of this embodiment, as represented in **Figure 4****,** a first portion sensor (31) is provided on a region upstream of the beverage preparation device (3), in respect of the supply path of the individual portion (7), and a second portion sensor (32) on a region downstream thereof. It is preferred when said portion sensors (31, 32) are arranged in the proximity of the beverage preparation device (3), so that can be further actuated in case of an eventual jamming of the individual portion (7) in those regions.

The individual portion (7) is supplied so that its passage can be detected at the entry into the beverage preparation device (3), preferentially by an entry sensor (31), then the actuation of the actuation device (4) is automatically triggered for closing the beverage preparation device (3). Said closed position is inferred based upon the detection of actuation of a first position sensor (41) associated with a first edge of path of said actuation device (4).

The user places the drinking recipient (1) so that its correct placement can be confirmed, for example by means of actuation of a first recipient sensor (21) of mechanical switch type - vide **Figure 2****.**

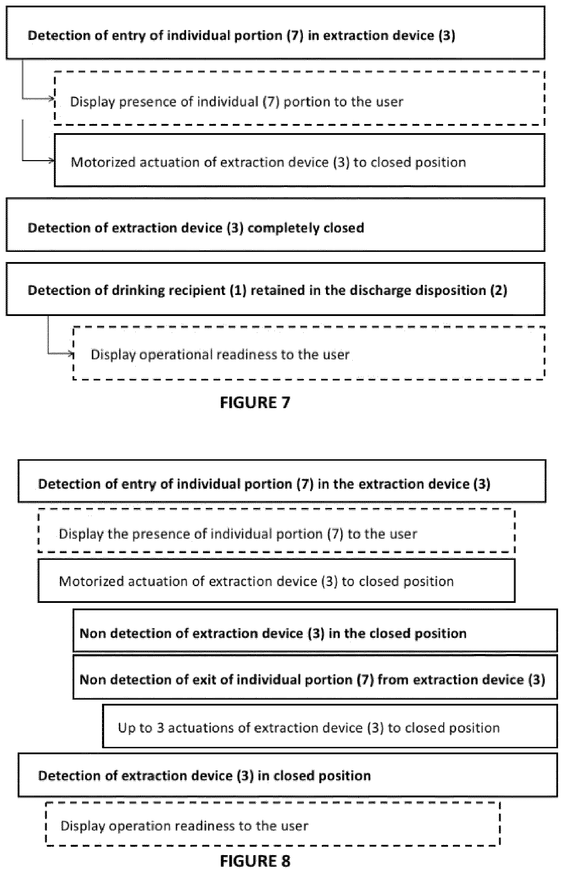

In particular, this operation cycle therefore includes the assessment by the control means (9) of detection of actuation of the entry sensor (31), of detection of position of the actuation device (4) and finally, of detection of drinking recipient (1) in a correct retention position on the beverage discharge disposition (2) - vide **Figure 7****.**

The phase of fluid circulation can only be initiated after confirmation of these conditions, by means of a respect external start input, for example by means of actuation by the user of an interface specific for this purpose on the apparatus (10). At the end of the beverage discharge, the actuation device (4) is commanded to open, thereby providing the ejection of the individual portion (7) out of the beverage preparation device (3) .

**Figure 6** represents the first phases of an embodiment of the process according to the present invention, whereby the placement of the drinking recipient (1) is the event that triggers and/or enables the further actions of the remaining operation cycle.

Moreover, in this case, it is the opening of the access disposition (5) of the apparatus (10), and not the actuation of another specific interface on the apparatus (10), that triggers the start of the initial phase including switching on the control means (9), and providing operating readiness of the flow heating means and pressurization means. It is further confirmed that the beverage preparation device (3) is closed. This can be advantageous for example in the case that the operation cycle is of washing of the hydraulic circuit, and not of beverage preparation.

The second phase is triggered thereafter by the placement of the drinking recipient (1). There is first a confirmation of the correct retention thereof on a first position, by means of contact with a recipient sensor (21) associated with the beverage discharge disposition (2) - vide Figure 5.

With this confirmation, the opening of the beverage preparation device (3) is triggered and information can be displayed to the user that he can now insert the individual portion (7).

The entry of the individual portion (7) is likewise detected after supply thereof and the closing of the beverage preparation device (3) is triggered, whereby there is afterwards confirmed whether the actuation device (4) reaches its final position.

If that is not the case, information of jammed individual portion (7) can be displayed to the user.

In case of confirmation of closure, the user can then additionally rotate the drinking recipient (1) to a second position along a handling alignment (A), corresponding to the quantity of beverage that he wishes - vide **Figure 2****.** The start of the fluid supply (FS) is triggered automatically after a previously defined period of time after detection of this manipulation.

**Figure 7** represents a flow diagram of an embodiment of interactions and control events before beginning of the fluid injection in a process according to the invention.

As represented, the control means (9) apprehend data associated with a plurality of control events, including the entry of individual portion (7) in the beverage preparation device (3), the position of complete closure of the latter, and the position of retention of the drinking recipient (1) on the beverage discharge disposition (2). After confirmation of these control events, the readiness for beginning of fluid injection and beverage discharge is displayed to the user.

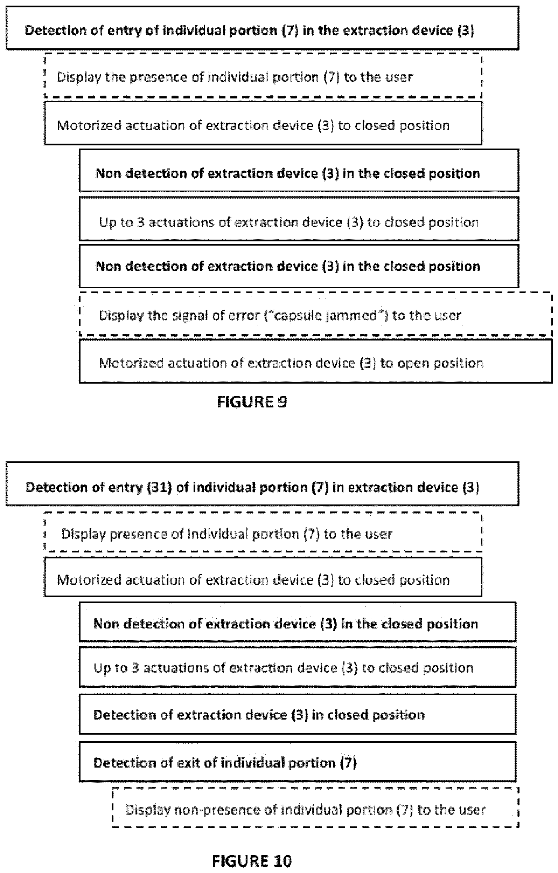

**Figures 8** and **9** represent different operation scenarios in the case of, after detection of passage of the individual portion (7) by an entry region, the complete closure of the beverage preparation device (3) is not detected, such that it is inferred that the individual portion (7) can be jammed on said entry region thereof.

In this case, the control means (9) commands the actuation device (4) up to 3 time in successive opening and closing movements, so as to try overcome the eventual jamming. In the case of Figure 8, this is achieved by means of detection of the beverage preparation device (3) in the closed position, so that the beverage preparation can be resumed. In the case of Figure 9, this is not achieved, so that an indication of error, or more specifically of a jammed individual portion (7) is displayed, followed by the opening of the beverage preparation device (3) so that the cause of error can be better assessed.

**Figure 10** represents the eventual exit of the individual portion (7) from the beverage preparation device (3) in one of the opening and closing attempts. In this case, besides displaying the absence of individual portion (7) to the user, the beverage preparation device (3) can be automatically actuated into opening, so that can collect another individual portion (7).

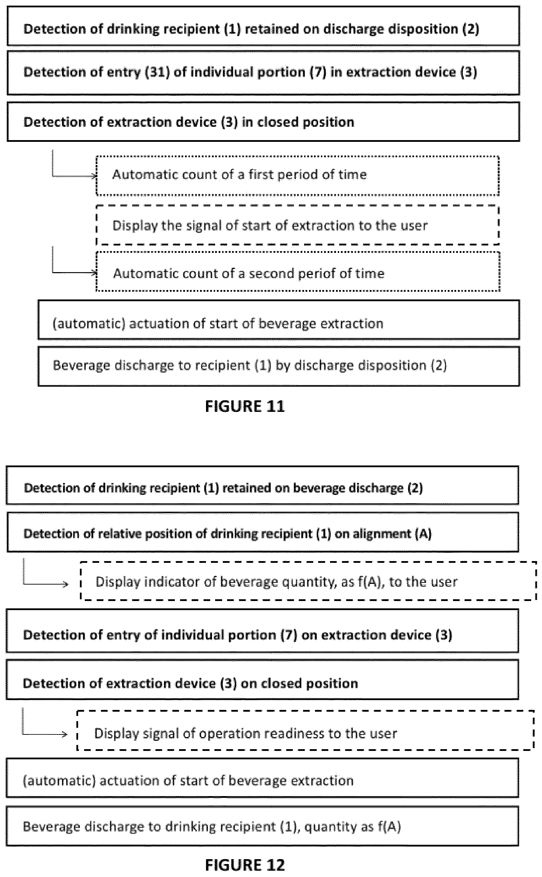

**Figure 11** represents a beverage preparation cycle whereby, having assessed the several control events required, the beginning of pressurized flow supply is automatically triggered, without requiring a specific intervention by the user.

Moreover, in analogous manner to the embodiment represented in Figure 6, it is the detection of placement of drinking recipient (1) in the beverage discharge disposition (2) that automatically triggers the opening of the beverage preparation device (3) for introduction of the individual portion (7).

It thus advantageously results that the number of interactions required by the user is minimized. In particular, this only has to place the drinking recipient (1) and, eventually, place the individual portion (7) in the apparatus (10), not being required to actuate levers or press buttons to prepare a beverage. The apparatus (10) can also be devoid of specific interfaces for this purpose.

**Figure 12** shows an embodiment whereby there is detected the relative position of the drinking recipient (1) along a handling alignment (A), so as to infer the quantity of beverage to be discharged.

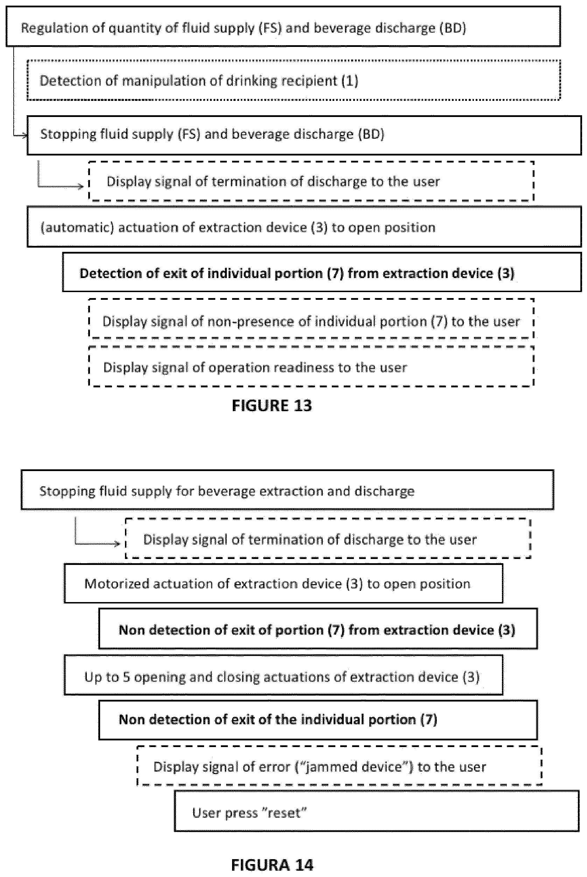

**Figures 13** and **14** are related with steps after conclusion of the beverage discharge.

In particular, after conclusion of the beverage discharge, the beverage preparation device (3) can be actuated to an open position, so that the individual portion (7) can be thereby ejected out of it.

Said actuation to opening can be automatically triggered after termination of the beverage discharge.

It is preferred when the actuation of opening of the beverage preparation device (3) can furthermore only be carried out after detection of handling of the drinking recipient (1) on said beverage discharge disposition (2).

The detection of handling can be carried out by said second recipient sensor (22), for example detecting its handling in a second direction along said handling alignment (A) - vide **Figure 2****.**

It is preferred when the opening actuation of the beverage preparation device (3) is triggered by the cessation of actuation of actuation of said first recipient sensor (21), corresponding to the removal from the retention position. An eventual discharge of beverage rests still accumulated under pressure inside the beverage preparation device (3) while closed, is herewith prevented.

In case that the exit of the individual portion (7) is not detected after the opening actuation of the beverage preparation device (3), then the control means (9) instruct the repetition of up to 5 closing and opening actuations, that repeat until the exit of individual portion (7) is detected.

## Claims

1. System for preparing beverages from an edible substance, and that includes:
- a drinking recipient (1);
- an individual portion (7) of the edible substance;
- an beverage preparation apparatus (10) adapted for preparing beverages and comprising:
▪ a beverage discharge disposition (2) adapted so that can provide support for operative placement of said drinking recipient (1), and preferentially discharge of a beverage discharge flow (BD) to the drinking recipient (1) along the direction opposite the direction of the gravity force;
▪ optionally, an access disposition (5) adapted so that can be moved between a first and a second position where provides access for placement of the drinking recipient (1) on the beverage discharge disposition (2), and vice-versa;
▪ a beverage preparation device (3) adapted so that can be actuated between a first and a second position, and vice-versa, preferentially by an actuation device (4), and that can thereby collect said individual portion (7) inside and discharge it outwards;
▪ a flow pressurization device (8), for example a pump, adapted so that can provide a pressurized fluid supply (FS) to said beverage preparation device (3),
▪ control means (9) adapted so that can apprehend related data and control the operation of several devices of the apparatus (10), as well as the display of information associated with each operation cycle,
**characterized**
**in that** the control means (9) are adapted so that, for each beverage preparation cycle, can determine: readiness for start of the operation cycle, operation errors and corrective measures thereof, in each case based upon assessing the conditional relations associated with:
- the relative position of the drinking recipient (1) on said beverage discharge disposition (2), preferentially further along a handling alignment (A) associated with said beverage discharge disposition (2),
- the relative position of the individual portion (7) relative to the beverage preparation device (3),
- the relative position of the beverage preparation device (3) relative to respective total opening and total closure positions.

2. System according to claim 1, **characterized**
**in that** the control means (9) are adapted so that can regulate at least one of: actuation of said actuation device (4) and actuation of said flow pressurization device (8), as well as display of operative conditions to the user, based upon at least two of:
- the correct retention of the drinking recipient (1) inferred based upon at least one previously defined relative position of the drinking recipient (1) on said beverage discharge disposition (2), preferentially further the quantity of beverage to be discharged inferred based upon the position along a manipulation alignment associated with said beverage discharge disposition (2),
- the correct entry and exit of the individual portion (7), in particular the entry and exit of individual portion (7) of said beverage preparation device (3);
- the position of start and end of path of said actuation device (4), thereby inferring the total opening or total closure of the beverage preparation device (3).

3. System according to claim 1 or 2, **characterized in that** the control means (9) are adapted so that can regulate the operation of said flow pressurization device (8) according to the following conditions:
- cannot be started in case of non-retention of said drinking recipient (1) on said beverage discharge disposition (2), and/or in case the beverage preparation device (3) is not in the totally closed position, even in case the presence of an individual portion (7) inside thereof is inferred, and
- can be started even there is no inference of the presence of an individual portion (7) inside of said closed beverage preparation device (3);
- can be concluded by the removal of retention of the drinking recipient (1) from said beverage discharge disposition (2), and can be suspended by a manipulation of the drinking recipient (1) on said handling alignment.

4. System according to any of claims 1 to 3, **characterized in that** the control means (9) are adapted so that can command the operation of said actuation device (4) based upon the relative position of said individual portion (7) and on the start and end position of path of said actuation device (4), and
**in that** said control means (9) are adapted so that can infer the relative position of said individual portion (7) and eventual jamming thereof at the entry or at the exit of said beverage preparation device (3) based upon the start and end position of path of said actuation device (4).

5. System according to any of claims 1 to 4, **characterized in that** the control means (9) are adapted so that, for each beverage preparation cycle, can automatically regulate:
- the fluid injection by said flow pressurization device (8) so as to provide a fluid supply (FS), and
- the opening and closing of said beverage preparation device (3),
as a function of detection of respective control events, preferentially by means of detection sensors (21, 22; 31, 32; 41, 42), and without requiring a specific actuation by the user, whereby the regulation of fluid supply (FS) is function at least of the detection of presence of the drinking recipient (1) on said beverage discharge disposition (2), and the regulation of the opening and closing of the beverage preparation device (3) is function of at least one of: detection of the presence of the drinking recipient (1) on said beverage discharge disposition (2) and detection of the presence of the individual portion (7) in the beverage preparation device (3), so that said apparatus (10) can be devoid of use interfaces specifically for actuating at least one of: the start and end of fluid injection, and the opening and closing of the beverage preparation device (3), in each beverage preparation cycle.

6. System according to any of previous claims 1 to 5, **characterized**
**in that** the control means (9) are adapted so that can control actuations of start and end of the fluid supply (FS) based upon detected handling of the drinking recipient (1) to at least a first position, and preferentially to at least a second position associated with a handling alignment (A) on said beverage discharge disposition (2), including along at least one of two directions, of a handling alignment (A) that extends in a direction transversal to the direction of the gravity force, and
**in that** the control means (9) are adapted so that can automatically command:
- start of operation of said flow pressurization device (8), and therewith fluid supply (FS), in case of detection of all of the following control events:
▪ retention of said drinking recipient (1) on said beverage discharge disposition (2), preferentially further manipulation of said drinking recipient (1) for example in a first direction along said handling alignment (A),
▪ entry of the individual portion (7) in said beverage preparation device (3), and
▪ total closure of said beverage preparation device (3) by said actuation device (4);
- interruption and/or end of operation of the flow pressurization device (8) in case of detection of at least one of the following control events:
▪ manipulation of the drinking recipient (1), for example in a second direction along the handling alignment (A),
▪ removal of the drinking recipient (1) from retention on the beverage discharge disposition (2),
without requiring actuation of a specific interface by the user, so that the apparatus (10) can be devoid of a use interface configured specifically and only for actuation of start and end of operation cycle, such as for example a push button or similar.

7. System according to any one of previous claims 1 to 6, **characterized**
**in that** the control means (9) are adapted so that, in each operation cycle, can automatically command the closing of the beverage preparation device (3) in case there is detected the entry of the individual portion (7) on said beverage preparation device (3), and
**in that** the control means (9) are adapted so that can automatically command the opening of said beverage preparation device (3), so that said individual portion (7) is ejected out thereof, in case of detection of at least one of the following first and second events:
- end of the period corresponding to the quantity of beverage selected by the user, preferentially by means of manipulation of the drinking recipient (1) along a given extension in a first direction of said manipulation alignment (A) on said beverage discharge disposition (2);
- manipulation of said drinking recipient (1) by the user in a second direction;
or after the second event happens after the first event,
so that said apparatus (10) is devoid of a use interface configured specifically and only for actuation of opening and closing of the beverage preparation device (3), such as for example a lever, a push button or similar.

8. System according to any one of previous claims 1 to 7, **characterized in that** the control means (9) are adapted so that can infer the following events based upon the following respective means:
- the retention of the drinking recipient (1): based upon the actuation of recipient apprehension means (21, 22) associated with manipulation alignments (A, B) associated with said beverage discharge disposition (2),
- the presence of the individual portion (7): based upon the actuation of portion detection means (31, 32), preferentially a first and a second portion sensor (31, 32) associated with said beverage preparation device (3),
- the position of the beverage preparation device (3): based upon the actuation of position sensors (41, 42) associated with the edges of path of said actuation device (4) and corresponding to the total opening and total closure of said beverage preparation device (3).

9. System according to any one of previous claims 1 to 8, **characterized**
**in that** the control means (9) are adapted so that can detect the relative positions of the drinking recipient (1), of the individual portion (7) and beverage preparation device (3) provided in each case by means of actuation of respective contact sensors (21, 22; 31, 32; 41, 42), adapted so that can apprehend at least two points of a respective displacement path of the drinking recipient (1) on the beverage discharge disposition (2), of individual portion (7) relative to the entry in, and exit from, the beverage preparation device (3) and the total opening and total closure of the beverage preparation device (3), and so that respective actuation data can be communicated to said control means (9).

10. System according to any one of previous claims 1 to 9, **characterized**
**in that** the control means (9) are adapted so that can detect the relative position of the access disposition (5), including of total opening and of total closure thereof, provided in each case by means of actuation of contact sensors associated with at least one of: access disposition (5) and a respective actuation device.

11. Process for preparing a beverage with an individual portion (7) of edible substance, said process including the steps:
- providing a beverage preparation system;
- turning the apparatus (10) on;
- providing a mode of operational readiness, including of fluid supply means (FS) and so that the control means (9) are functionally connected with the operative components of the apparatus (10);
and, in each beverage preparation cycle associated with an individual portion (7), including the following interactions and control events before starting fluid supply (FS):
- placing a drinking recipient (1) on the beverage discharge disposition (2) of the apparatus (10);
- manipulating the drinking recipient (1) to a retention position;
- control event: confirming retention of the drinking recipient (1), preferentially by means of a first recipient sensor (21) associated with the beverage discharge disposition (2);
- control event: confirming readiness of components for fluid supply (FS);
- optionally:
- further handling the drinking recipient (1) to a relative position along a handling alignment (A, B) on the beverage discharge disposition (2), thereby actuating at least one respective recipient sensor (21, 22);
- determining at least one beverage discharge parameter, including the flow type or the quantity of beverage, preferentially based upon the actuation of said recipient sensor (21, 22);
- supplying an individual portion (7) to the beverage preparation device (3);
- control event: confirming supply of individual portion (7) to the beverage preparation device (3), preferentially by means of a first portion sensor (31);
- automatic actuation of closure of the beverage preparation device (3) by the actuation device (4), after detection of the supply of individual portion (7);
- control event: confirming total closure of the beverage preparation device (3), preferentially by means of a first actuation sensor (41) associated with the actuation device (4) .

12. Process according to claim 11, **characterized**
**in that** includes the start of fluid supply (FS) to the beverage preparation device (3),
whereby the flow pressurization device (8) operates according to the following conditions:
- only after confirmation of the total closure of the beverage preparation device (3), whereby the flow pressurization device (8) can start operation automatically, after a previously defined period of time, after occurring the last of said control events;
- as long as there is detected actuation of the first recipient sensor (21), and during the period of time corresponding to the discharge of the selected beverage quantity, or until a manipulation of the drinking recipient (1) after start of fluid supply (FS).

13. Process according to claim 11 or 12, **characterized in that** said providing a mode of operational readiness is automatically triggered by the detection of at least one of:
- opening of the access disposition (5);
- placement of the drinking recipient (1) on the beverage discharge disposition (2), and
**in that** the deactivation of said mode of operational readiness is automatically triggered after a previously defined period of time without detecting operative placement of drinking recipient (1) on the beverage discharge disposition (2).

14. Process according to claims 11 to 13, **characterized**
**in that** the beverage preparation device (3) is automatically actuated for closing after a previously defined period of time after said detection of supply of individual portion (7) to the beverage preparation device (3),
and
**in that** the beverage preparation device (3) is automatically actuated to open in any of the following conditions:
- after the first recipient sensor (21) ceases being actuated, and
- a previously defined period of time after termination of the beverage discharge.

15. Process according to claims 11 to 14, **characterized in that** includes the actuation of the beverage preparation device (3):
- in at least 1 and up to 3 consecutive movements of partial opening and attempt of closure of the beverage preparation device (3), in case the supply of individual portion (7) is apprehended, for example by means of actuation of a first portion sensor (31), and in case the total closure of the beverage preparation device (3) is not apprehended, during a previously defined period of time after commanding closure thereof;
- in at least 1 and up to 5 consecutive movements of closure and opening of said beverage preparation device (3), in case that the opening of the actuation device (4) is apprehended and the total exit of individual portion (7) is not apprehended, for example by means of actuation of a second portion sensor (32), in a previously defined time period after the opening command thereof,
so as to unjam an individual portion (7) from the entry/ exit region of said beverage preparation device (3).

16. Process according to claims 11 to 15, **characterized in that** the start of fluid supply (FS) to the beverage preparation device (3) is automatically triggered, without requiring a respective actuation by the user, after a previously defined period of time after detecting a control event associated with the beverage discharge disposition (2), preferentially after the drinking recipient (1) actuates a recipient sensor (21, 22), preferentially only after a previously defined period of time after detection of an extension of relative displacement of the drinking recipient (1) in at least one of a first and second handling alignment (A, B) on the beverage discharge disposition (2), by at least one recipient sensor (21, 22).

17. Process according to claims 11 to 16, **characterized in that** only requires the user to carry out the following steps in each beverage preparation cycle:
- operatively placing the drinking recipient (1) on the beverage discharge disposition (2);
- placing the individual portion (7) in the apparatus (10);
- preferentially further handling the drinking recipient (1) along the handling alignment (A);
- removal of the drinking recipient (1);
whereby the opening and closure of the beverage preparation device (3) is triggered automatically, preferentially after a previously defined period of time, after each one of said user interactions.

18. Process according to claims 11 to 17, **characterized in that** further includes the steps:
- opening of an access disposition (5), thereby enabling access to the beverage discharge disposition (2), after which there is triggered, preferentially automatically, at least one of, preferentially all of the following steps:
- start of an operational readiness mode;
- command of opening of the beverage preparation device (3) ;
- closure of the access disposition (5), preferentially automatically triggered after a previously defined period of time after detection of a drinking recipient (1) on the beverage discharge disposition (2), after which there is triggered, preferentially automatically, at least one of, preferentially both of the following steps:
- exit from the operational readiness mode;
- command of closure of the beverage preparation device (3) .
